# DEMANDE DE BREVET EUROPEEN

(11) **EP 2 181 881 A1**
(43) Date de publication de la demande: **05.05.2010**
(21) Numéro de dépôt: 09173243.8
(22) Date de dépôt: 16.10.2009
(51) Int. Cl.: B60K 37/04

(54) **Planche de bord de vehicule automobile**

(30) Priorité: 30.10.2008 FR 0857408
(71) Demandeur: Peugeot Citroën Automobiles SA, 78140 Vélizy-Villacoublay (FR)
(72) Inventeur: Nicolas, Laurent, 92800 PUTEAUX (FR); Vrinat, David, 92140 CLAMART (FR)
(74) Mandataire: Vigand, Régis Louis Michel

(57) **Abrégé**

L'invention concerne une planche de bord de véhicule automobile comprenant un écran de commande (5) reconfigurable, présentant des touches tactiles (50) dont le nombre, l'emplacement et les fonctions représentées peuvent varier, et un écran d'affichage (6) d'information au moins à la demande de l'écran de commande (5), l'écran de commande et l'écran d'affichage étant physiquement distincts l'un de l'autre.

## Description

L'invention concerne le domaine des planches de bord de véhicule automobile, et plus particulièrement les planches de bord comprenant un ou plusieurs écrans reconfigurables tactiles. Un écran reconfigurable intègre souvent à la fois des commandes et des informations affichables notamment les retours d'information correspondant à l'activation des commandes. Cet écran reconfigurable présente une grande souplesse d'utilisation, au détriment toutefois d'une lisibilité réduite provenant du mélange de touches de commandes et de retours d'information.

Un tel art antérieur est par exemple décrit dans la demande de brevet américain US 2007/0093980. L'écran utilisé est un écran à retour haptique.

L'invention a mis en évidence une réduction supplémentaire de lisibilité d'un tel écran reconfigurable provenant de la représentation de touches de commande et d'affichage de retour d'information sur un même écran physique dont la localisation et la disposition doivent réaliser un bon compromis d'ergonomie à la fois pour les touches de commande et pour les retours d'information affichés.

L'invention a mis en évidence le fait que, même si les touches de commande sont regroupées au sein d'une première zone de l'écran reconfigurable et si les retours d'information affichés sont regroupées au sein d'une deuxième zone de l'écran reconfigurable, les deux zones de l'écran sont trop interdépendantes pour permettre de réaliser un bon compromis à la fois en termes d'une part de visibilité pour l'affichage des retours d'information et d'autre part d'accessibilité surtout et de visibilité aussi pour les touches de commande.

L'invention propose non seulement de regrouper d'une part les retours d'information affichés au sein d'une zone et d'autre part de regrouper les touches de commande au sein d'une autre zone distincte de la précédente, mais aussi de rendre suffisamment indépendantes entre elles ces deux zones en les affectant à deux écrans physiquement distincts. Ainsi, les deux écrans, écran de commande tactile et écran d'affichage des retours d'information correspondant à l'activation des commandes de l'écran de commande, peuvent être localisés à des endroits suffisamment distincts l'un de l'autre et disposés de manières suffisamment distinctes l'une de l'autre, par exemple en termes d'orientation, pour permettre à chaque écran de réaliser un bon compromis qui lui est propre. Pour l'écran d'affichage, le bon compromis réside essentiellement dans une bonne visibilité pour le conducteur du véhicule, et de préférence en perturbant le moins possible la visibilité que le conducteur peut avoir de la route devant le véhicule, au travers du pare-brise. Pour l'écran de commande tactile, le bon compromis réside essentiellement dans une bonne accessibilité des touches de commande par le conducteur avec de préférence un minimum de geste et de déplacement des différentes parties de son corps, afin de perturber le moins possible la position de son corps pendant la conduite du véhicule, par exemple en ne nécessitant que le mouvement du bras vers l'écran de commande sans déplacement ni du tronc ni même avantageusement sans déplacement notable des épaules entraînant leur décollement du siège.

Selon l'invention, il est prévu une planche de bord de véhicule automobile comprenant un écran de commande reconfigurable, présentant des touches tactiles dont le nombre, l'emplacement et les fonctions représentées peuvent varier, et un écran d'affichage d'information au moins à la demande de l'écran de commande, l'écran de commande et l'écran d'affichage étant physiquement distincts l'un de l'autre. L'écran d'affichage réalise notamment l'affichage de tout ou partie des retours d'information correspondant à l'activation des touches de commande de l'écran de commande. L'écran d'affichage peut aussi avantageusement réaliser l'affichage d'autres informations comme par exemple la vitesse du véhicule, même si l'écran de commande présente une page correspondant au réglage de la climatisation. Les écrans de commande et d'affichage étant physiquement distincts l'un de l'autre, il n'y a guère de difficulté à réaliser un affichage de ces retours d'information qui soit déporté par rapport à l'écran de commande comprenant les touches de commande dont l'activation a généré l'affichage desdits retours d'information. L'écran de commande est tactile car il présente des touches tactiles. De préférence, l'écran de commande est un écran à retour haptique. Un écran à retour haptique est un écran qui, lors de l'activation d'une touche tactile lui appartenant, donne un retour tactile à l'utilisateur, c'est-à-dire un retour qui peut être senti par le doigt de l'utilisateur ayant activé ladite touche tactile. Ce retour tactile est le plus souvent une série de mouvements dans le plan de l'écran dont la nature et la fréquence donnent l'impression, au doigt de l'utilisateur, d'une vibration orthogonale au plan de l'écran. Ainsi, l'utilisateur a comme l'impression d'avoir «enfoncé» un bouton. L'intérêt d'utiliser un écran de commande à retour haptique réside dans le fait qu'il diminue la durée de détournement du regard du conducteur de la route vers l'écran de commande puisqu'il confirme tout de suite au conducteur que sa pression sur la touche de commande a bien été prise en compte, avant même que le conducteur soit apte à s'en rendre compte par visualisation d'un affichage de retour d'information sur l'écran d'affichage. En plus, cette confirmation immédiate de prise en compte améliore la sécurité car elle empêche une montée de stress ou d'agacement chez le conducteur qui tâtonnerait avant de réaliser par la visualisation de l'affichage du retour d'information sur l'écran d'affichage que sa commande a bien été prise en compte.

De préférence, l'écran de commande est complètement lisse, et avantageusement complètement plat. L'écran peut toutefois être courbe. Surtout si l'écran de commande est à retour haptique, la présence guidante et rassurante d'un relief sur la surface de l'écran de commande ne s'impose plus, et la suppression de ce relief rend la fabrication de l'écran plus simple tout en lui garantissant un maximum de reconfigurabilité.

De préférence, l'écran d'affichage est situé au-dessus de l'écran de commande. La zone de visualisation confortable et sécurisée du conducteur, c'est-à-dire en détournant le regard le moins loin possible de la route, est en effet située au-dessus de la zone d'accessibilité confortable de son bras opposé à sa portière de véhicule, à savoir en bougeant le moins possible le tronc et les épaules, et en évitant de décoller les épaules du siège, l'idéal étant de limiter les mouvements à un simple fléchissement léger du bras, accompagné le cas échéant d'une légère rotation de la tête, voire d'un simple changement de direction du regard conservant la tête immobile.

De préférence, l'écran d'affichage est saillant en dépassant vers le haut de la surface moyenne de la planche de bord. Ainsi, l'écran d'affichage se trouve en partie basse du pare-brise du véhicule, ce qui permet à l'utilisateur de le regarder de manière focalisée quelques instants tout en conservant la vision de la route, ou de la scène située devant son véhicule, en vision périphérique, laquelle vision périphérique si elle n'est pas très précise peut toutefois renseigner sur un mouvement notable, par exemple un objet, au sens large incluant un autre véhicule ou même un piéton, entrant dans son champ de vision.

De préférence, l'écran d'affichage et l'écran de commande sont situés au milieu de la planche de bord, entre ses extrémités gauche et droite. Ainsi, la place disponible, plus importante que sur les côtés, permet l'utilisation d'un écran d'affichage plus étendu, ainsi que l'accessibilité de l'écran de commande au passager de même rang que le conducteur, plus pour les commandes de confort que pour les commandes d'aide à la conduite qui restent normalement l'apanage du conducteur.

De préférence, la surface de l'écran d'affichage est plus grande que la surface de l'écran de commande. En effet, s'il est usuel d'afficher des informations, de conduite et ou de confort, correspondant à plusieurs univers différents, représentés par plusieurs menus différents, sur l'écran d'affichage, il est avantageux de n'afficher que les commandes correspondant à un seul de ces univers, et donc à un seul de ces menus, sur l'écran de commande.

Dans un mode de réalisation, un autre écran d'affichage d'information au moins à la demande de l'écran de commande est disposé au-dessus de la cavité de la planche de bord qui est prévue pour recevoir la colonne de direction d'un véhicule automobile. Ainsi, dans les véhicules de plus petite taille, grâce à ce deuxième écran d'affichage, toutes les informations voulues peuvent être affichées même si l'écran d'affichage principal situé par exemple au-dessus de l'écran de commande au milieu, entre gauche et droite, de la planche de bord, est de taille plus réduite. On peut même ainsi dissocier d'une part informations de conduite affichées de préférence au-dessus du volant et d'autre part informations de confort affichées de préférence en milieu de planche de bord pour être aussi bien, ou presque aussi bien, visibles par le conducteur que par le passager de même rang que le conducteur.

De préférence, l'écran d'affichage et l'écran de commande présentent des orientations différentes l'une de l'autre. Ainsi, on tire entièrement profit de la séparation physique entre l'écran de commande et l'écran d'affichage. Chaque écran peut réaliser son propre compromis sans devoir s'adapter au compromis de l'autre écran et donc sans devoir au final intégrer les contraintes des deux écrans. Avantageusement, lesdites orientations, par rapport à un axe latéral du véhicule automobile dans lequel la planche de bord est destinée à être installée, sont différentes. Avantageusement, lesdites orientations, par rapport à un axe vertical du véhicule automobile dans lequel la planche de bord est destinée à être installée, sont différentes. Ainsi, la souplesse d'implantation des deux écrans est maximisée. Différentes orientations d'écran, par rapport à un axe, signifient différentes positions, d'écran, que l'on peut obtenir en faisant pivoter, l'écran, autour dudit axe.

De préférence, en réponse à l'activation de certaines touches tactiles de l'écran de commande, une nouvelle fenêtre est affichée sur l'écran d'affichage. Ainsi, l'affichage de retour d'information est plus facilement visible pour le conducteur, et ce, sans qu'il ait trop besoin de détourner son regard de la route ou qu'il ait besoin de le détourner trop longtemps. Pour être plus facilement remarquable, la nouvelle fenêtre affichée utilise de préférence d'environ un tiers à la moitié de la largeur disponible, ainsi que plus des trois quarts de la hauteur disponible, sur l'écran d'affichage. De préférence, cette nouvelle fenêtre d'affichage de retour d'information suite à activation de commande, est toujours affichée dans la même zone de l'écran d'affichage, pour que le regard du conducteur ne la cherche pas trop sur l'écran d'affichage, par exemple à droite de l'écran d'affichage.

L'invention concerne aussi un véhicule automobile comprenant une planche de bord selon l'invention et un pare-brise situé au-dessus de la planche de bord, l'écran d'affichage étant préférentiellement disposé de manière à masquer une partie du pare-brise au conducteur du véhicule automobile. Ainsi, le conducteur n'a presque pas besoin de baisser le regard de sa route pour pouvoir jeter un coup d'oeil à l'écran d'affichage. Avantageusement, pour des raisons de sécurité car cet écran d'affichage n'est pas un écran partiellement transparent mais opaque par rapport à ce qui se situe derrière lui, la partie du pare-brise masquée au conducteur correspond à une partie du capot du véhicule et non pas à une partie du paysage situé devant le capot du véhicule. Le véhicule automobile est de préférence une voiture.

De préférence, l'écran de commande n'est pas un écran partiellement transparent mais opaque par rapport à ce qui se situe derrière lui.

Préférentiellement, l'écran d'affichage est orienté vers le haut du véhicule automobile. Préférentiellement, l'écran d'affichage est orienté vers le siège conducteur, c'est-à-dire vers la gauche du véhicule automobile, pour un véhicule à conduite à gauche. Il serait orienté à droite pour un véhicule à conduite à droite. Ainsi, l'écran d'affichage est disposé idéalement pour une vision optimisée pour le conducteur.

De préférence, les écrans d'affichage et de commande sont rectangulaires, la petite dimension étant verticale par rapport au véhicule automobile. Ainsi, l'on profite mieux de l'espace disponible au niveau de la planche de bord qui est plus en largeur qu'en hauteur.

L'invention va maintenant être décrite plus en détail à l'aide des figures ci-après, données à titre d'exemples illustratifs et non limitatifs, où :
- la figure 1 représente schématiquement un premier exemple d'implémentation d'un écran de commande et d'un écran d'affichage dans une planche de bord selon l'invention ;
- la figure 2 représente schématiquement un exemple de configuration d'un écran de commande et un exemple d'affichage correspondant d'information sur un écran d'affichage dans une planche de bord selon l'invention ;
- la figure 3 représente schématiquement un deuxième exemple d'implémentation d'un écran de commande et d'un écran d'affichage dans une planche de bord selon l'invention ;
- la figure 4 représente schématiquement un troisième exemple d'implémentation d'un écran de commande et d'un écran d'affichage dans une planche de bord selon l'invention ;
- la figure 5 représente schématiquement une première phase d'utilisation pour le premier exemple d'implémentation d'un écran de commande et d'un écran d'affichage dans une planche de bord selon l'invention ;
- la figure 6 représente schématiquement une deuxième phase d'utilisation pour le premier exemple d'implémentation d'un écran de commande et d'un écran d'affichage dans une planche de bord selon l'invention ;
- la figure 7 représente schématiquement une troisième phase d'utilisation pour le premier exemple d'implémentation d'un écran de commande et d'un écran d'affichage dans une planche de bord selon l'invention ;
- la figure 8 représente schématiquement une quatrième phase d'utilisation pour le premier exemple d'implémentation d'un écran de commande et d'un écran d'affichage dans une planche de bord selon l'invention.

Pour l'ensemble des figures qui suivent, lorsqu'on parle du passager, sans autre précision, il s'agit du passager de même rang que le conducteur du véhicule.

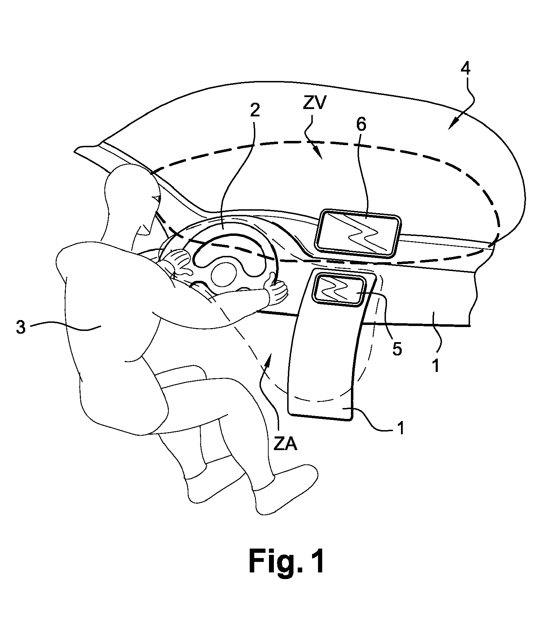

La figure 1 représente schématiquement un premier exemple d'implémentation d'un écran de commande et d'un écran d'affichage dans une planche de bord selon l'invention. L'habitacle du véhicule automobile intègre un conducteur 3 en position de conduite tenant un volant 2 fixé au sommet d'une colonne de direction s'enfonçant dans une planche de bord 1 surmontée d'un pare-brise 4.

La zone de visualisation ZV du conducteur 3, dans laquelle il peut aisément promener son regard sans nuire de manière notable à la sécurité de sa conduite, est située au-dessus de la zone d'accessibilité ZA du conducteur 3, dans laquelle les doigts de sa main droite peuvent évoluer en ne nécessitant qu'un léger fléchissement de son bras droit sans avoir besoin de décoller ses épaules du siège sur lequel il est assis, siège qui n'est pas représenté sur les figures. Il s'agit de la main droite et du bras droit du conducteur pour une conduite à gauche, il s'agirait de manière symétrique de la main gauche et du bras gauche du conducteur pour une conduite à droite. La planche de bord 1 s'étend de gauche à droite dans l'habitacle et inclut la console centrale s'étendant en partie basse lorsqu'il y en a une.

Sur la planche de bord sont disposés, l'un au-dessus de l'autre, l'écran de commande 5 en dessous et l'écran d'affichage 6 au-dessus. L'écran de commande 5 est à hauteur du volant 2 tandis que l'écran d'affichage 6 est saillant au-dessus de la planche de bord 1 , disposé un peu plus haut que le volant 2, et masquant au conducteur une partie du pare-brise 4. La superficie ainsi que la largeur de l'écran d'affichage 6 sont respectivement plus grandes que la superficie et la largeur de l'écran de commande 5. L'écran de commande 5 est tourné vers le haut, mais pas plus vers le conducteur 3 que vers le passager de même rang non représenté sur les figures. L'écran d'affichage 6 est tourné vers le haut et vers la gauche, donc plus vers le conducteur 3 que vers ledit passager. L'écran d'affichage 6 est le seul écran d'affichage de retour d'information de l'écran de commande 5, à l'exception d'une modification visuelle des touches tactiles de l'écran de commande 5 lors de leur activation par le conducteur 3. Le retour d'information proprement dit n'est pas la modification visuelle de la touche de commande lors de son actionnement mais l'affichage d'une information représentative de l'activation de la fonction correspondante. Par exemple si on appuie sur une touche de réglage de la température, mettre la touche en surbrillance est une chose, modification visuelle, l'affichage de la température sélectionnée en est une autre, retour d'information proprement dit. L'avantage de ce mode d'implantation préférentiel par rapport aux autres est le confort visuel offert par un grand écran unique.

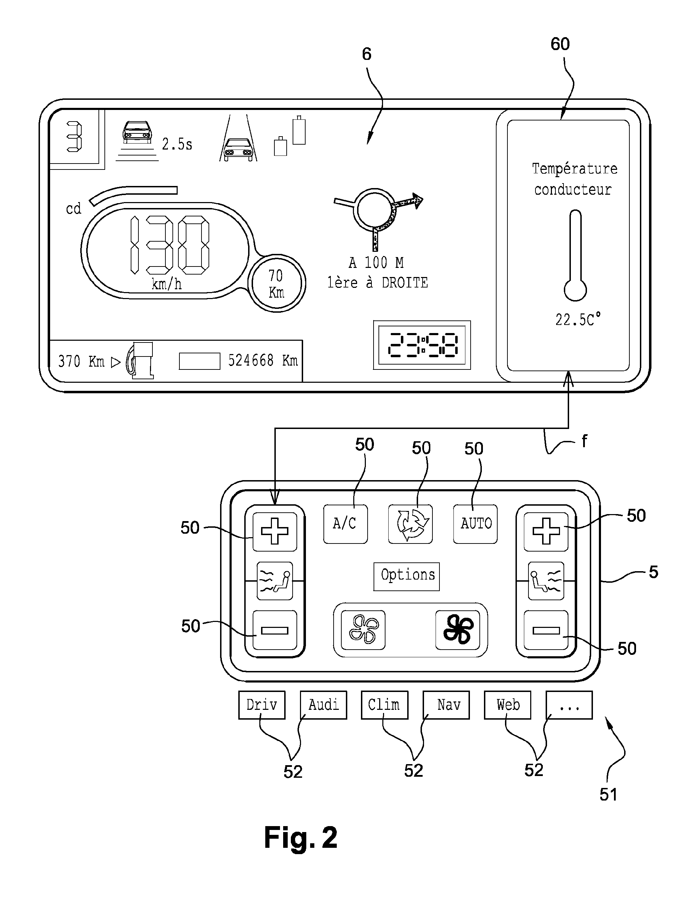

La figure 2 représente schématiquement un exemple de configuration d'un écran de commande et un exemple d'affichage correspondant d'information sur un écran d'affichage dans une planche de bord selon l'invention.

L'écran de commande 5, qui représente ici une fonction de confort, à savoir une page de touches tactiles 50 de fonctions de climatisation, est situé au-dessus d'un bandeau 51 de touches immuables 52 de type bouton classique, qui constituent des touches d'accès direct aux principaux univers, par exemple celui d'aide à la conduite ou ceux de confort, comme l'audio, la climatisation, la navigation, l'internet. Si le conducteur appuie sur l'emplacement de l'écran de commande 5 qui représente une touche d'augmentation de la température du côté du conducteur, une nouvelle fenêtre 60 s'affiche sur toute la partie droite de l'écran d'affichage 6. Cette nouvelle fenêtre représente la température du côté conducteur qui vaut ici 22,5 °C. Le retour d'information est symbolisé par la flèche f qui établit le lien entre d'une part l'activation de la touche tactile 50 située dans le coin supérieur gauche de l'écran de commande 5 et d'autre part l'affichage d'une nouvelle fenêtre 60 sur l'écran d'affichage 6.

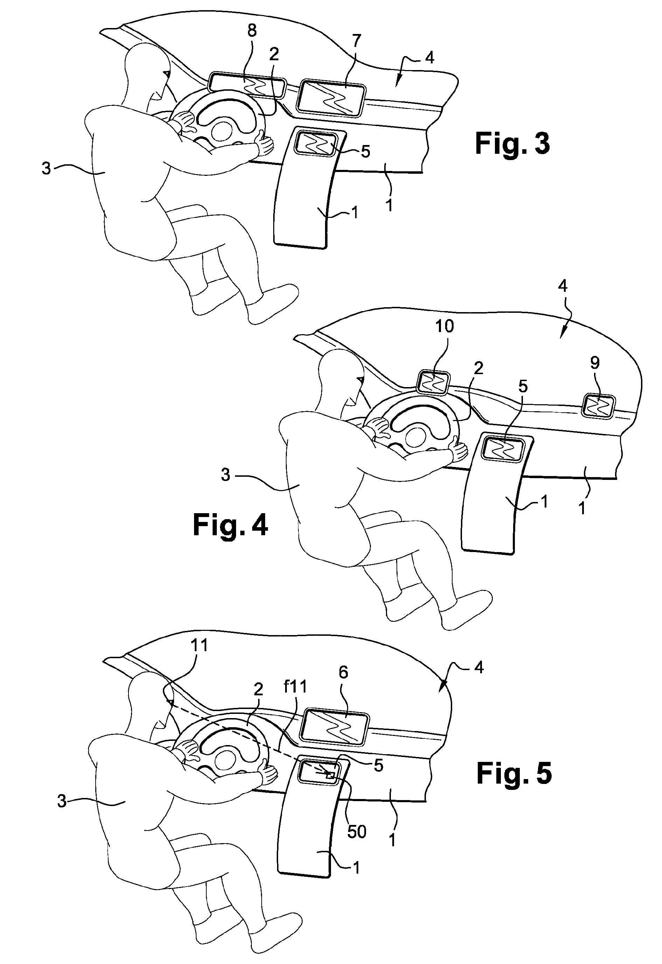

La figure 3 représente schématiquement un deuxième exemple d'implémentation d'un écran de commande et d'un écran d'affichage dans une planche de bord selon l'invention. Par rapport à l'implantation de la figure 1, la seule différence se situe au niveau de l'écran d'affichage. Le grand écran d'affichage 6 unique pour l'affichage de retour d'information a disparu. Il a été remplacé par un écran principal d'affichage 7 de taille plus modeste qui est situé à peu près au même endroit, et par un écran d'affichage 8 supplémentaire situé sur la planche de bord 1 , juste au dessus du volant 2 pour être bien visible du conducteur 3 en position de conduite assise, sans même que le conducteur 3 soit obligé de détourner la tête vers la droite.

Les écrans d'affichage 7 et 8 sont les seuls écrans d'affichage de retour d'information de l'écran de commande 5, à l'exception d'une modification visuelle des touches tactiles de l'écran de commande 5 lors de leur activation par le conducteur 3. Sur l'écran d'affichage 8 sont préférentiellement affichées les informations d'aide à la conduite tandis que sur l'écran d'affichage 7 sont affichées les informations de confort. Les informations d'aide à la conduite sont par exemple la régulation de vitesse, la limitation de vitesse, l'aide au parking. Les informations de confort sont par exemple la climatisation, l'audio, la téléphonie. L'avantage de ce mode d'implantation préférentiel par rapport aux autres est la meilleure localisation des informations de conduite, permettant au conducteur 3 de les regarder sans avoir besoin de tourner son regard vers la droite, juste en l'abaissant légèrement.

La figure 4 représente schématiquement un troisième exemple d'implémentation d'un écran de commande et d'un écran d'affichage dans une planche de bord selon l'invention. Par rapport à l'implantation de la figure 1 , la seule différence se situe au niveau de l'écran d'affichage. Le grand écran d'affichage 6 unique pour l'affichage de retour d'information a disparu. Il a été remplacé par deux écrans d'affichage, un écran d'affichage passager 9 et un écran d'affichage conducteur 10, tous deux de taille plus modeste que l'écran d'affichage 6 unique, et situés respectivement en face du passager et en face du conducteur 3.

Les écrans d'affichage 9 et 10 sont les seuls écrans d'affichage de retour d'information de l'écran de commande 5, à l'exception d'une modification visuelle des touches tactiles de l'écran de commande 5 lors de leur activation par le passager ou par le conducteur 3. Sur l'écran d'affichage conducteur 10 sont préférentiellement affichées les informations d'aide à la conduite et certaines informations de confort tandis que sur l'écran d'affichage passager 9 sont affichées des informations de confort. Ce mode d'implantation optionnel est moins intéressant que les deux précédemment décrits en liaison avec les figures 1 et 3.

La figure 5 représente schématiquement une première phase d'utilisation pour le premier exemple d'implémentation d'un écran de commande et d'un écran d'affichage dans une planche de bord selon l'invention. L'oeil 11 du conducteur 3 se détourne un bref instant de la route pour regarder l'écran de commande 5 de manière à repérer la touche tactile 50 correspondant à la fonction voulue. Ce coup d'oeil est symbolisé par la flèche f11. Plus le nombre de touches tactiles sur l'écran de commande 5 sera faible et plus ces touches tactiles seront grandes, plus le coup d'oeil pourra être rapide.

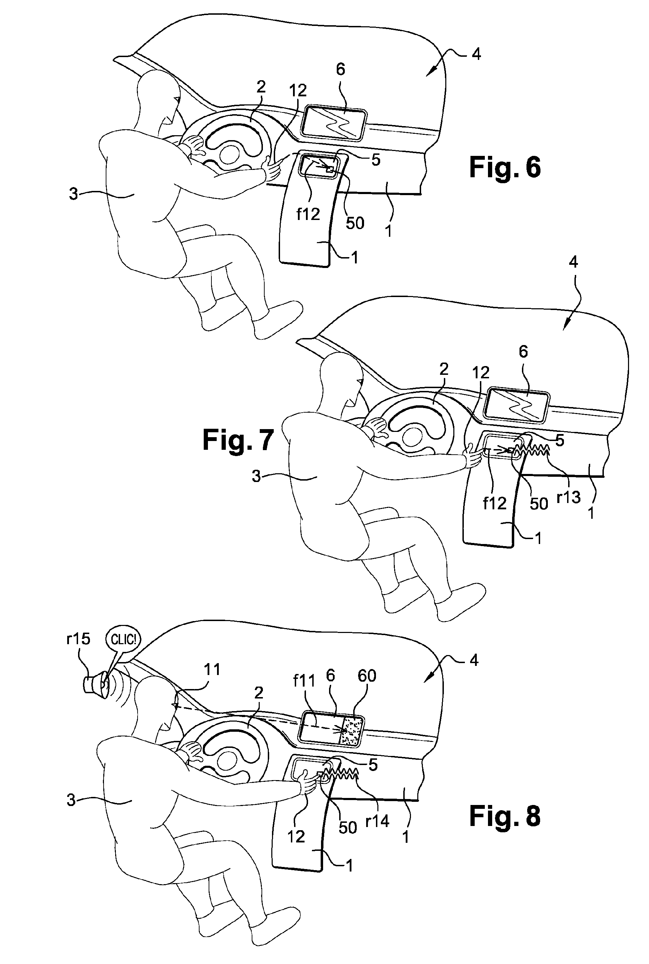

La figure 6 représente schématiquement une deuxième phase d'utilisation pour le premier exemple d'implémentation d'un écran de commande et d'un écran d'affichage dans une planche de bord selon l'invention. Une fois la touche tactile 50 voulue repérée, la main 12 du conducteur 3 se dirige vers elle pour l'atteindre. Plus le nombre de touches tactiles sur l'écran de commande 5 sera faible et plus ces touches tactiles seront grandes, plus le geste de la main 12, symbolisé par la flèche f12, pourra se contenter d'être imprécis sans manquer son but, et plus le coup d'oeil d'accompagnement de la main 12 pourra être bref, tout en permettant à la main 12, et même au doigt que le conducteur 3 a choisi pour activer la touche tactile 50, d'atteindre ladite touche tactile 50.

La figure 7 représente schématiquement une troisième phase d'utilisation pour le premier exemple d'implémentation d'un écran de commande et d'un écran d'affichage dans une planche de bord selon l'invention. La main 12, et plus précisément un doigt du conducteur 3, glisse sur l'écran de commande 5, ce que symbolise la flèche 12. Un premier type de retour haptique, symbolisé par les vibrations r13, permet au conducteur 3 de sentir où il se trouve, à savoir s'il est sur une touche tactile, s'il est entre deux touches tactiles, s'il arrive sur une touche tactile.

La figure 8 représente schématiquement une quatrième phase d'utilisation pour le premier exemple d'implémentation d'un écran de commande et d'un écran d'affichage dans une planche de bord selon l'invention. La main 12, et plus précisément un doigt du conducteur 3, appuie sur la touche tactile 50 voulue de l'écran de commande 5. Un deuxième type de retour haptique, symbolisé par les vibrations r14, vibrations plus nettes et ou plus fortes ressenties au moins par un doigt de sa main 12 en contact avec l'écran de commande 5, permet au conducteur 3 de sentir qu'il a bien appuyé sur la touche tactile 50 voulue et que la fonction correspondante a bien été activée, même s'il va mettre un instant un peu plus long à localiser l'affichage du retour d'information correspondant sur l'écran d'affichage 6, ici sous la forme de l'affichage d'une nouvelle fenêtre 60. Cette localisation par son oeil 11 est symbolisée par la flèche f11. Un retour sonore r15 peut optionnellement venir compléter le retour haptique r14 pour plus de sécurité et de confort au niveau du conducteur 3 qui alors ne peut plus douter que sa pression de la touche tactile 50 a bien été prise en compte et que l'activation de la fonction correspondante a bien été effectuée, et ce, même avant que son oeil 11 ne localise et ne visualise la nouvelle fenêtre 60 affichée sur l'écran d'affichage 6.

## Revendications

1. Planche de bord de véhicule automobile comprenant un écran de commande (5) reconfigurable, présentant des touches tactiles (50) dont le nombre, l'emplacement et les fonctions représentées peuvent varier, et un écran d'affichage (6) d'information au moins à la demande de l'écran de commande (5), l'écran de commande et l'écran d'affichage étant physiquement distincts l'un de l'autre.

2. Planche de bord de véhicule automobile selon la revendication 1, **caractérisée en ce que** l'écran de commande (5) est un écran à retour haptique.

3. Planche de bord de véhicule automobile selon la revendication 2, **caractérisée en ce que** l'écran de commande (5) est complètement lisse.

4. Planche de bord de véhicule automobile selon l'une quelconque des revendications précédentes, **caractérisée en ce que** l'écran d'affichage (6) est situé au-dessus de l'écran de commande (5).

5. Planche de bord de véhicule automobile selon la revendication 4, **caractérisée en ce que** l'écran d'affichage (6) est saillant en dépassant vers le haut de la surface moyenne de la planche de bord.

6. Planche de bord de véhicule automobile selon l'une quelconque des revendications précédentes, **caractérisée en ce que** l'écran d'affichage (6) et l'écran de commande (5) sont situés au milieu de la planche de bord, entre ses extrémités gauche et droite.

7. Planche de bord de véhicule automobile selon l'une quelconque des revendications précédentes, **caractérisée en ce que** la surface de l'écran d'affichage (6) est plus grande que la surface de l'écran de commande (5).

8. Planche de bord de véhicule automobile selon l'une quelconque des revendications précédentes, **caractérisée en ce qu'**un autre écran d'affichage (6) d'information au moins à la demande de l'écran de commande (5) est disposé au-dessus de la cavité de la planche de bord qui est prévue pour recevoir la colonne de direction d'un véhicule automobile.

9. Planche de bord de véhicule automobile selon l'une quelconque des revendications précédentes, **caractérisée en ce que** l'écran d'affichage (6) et l'écran de commande (5) présentent des orientations différentes l'une de l'autre.

10. Planche de bord de véhicule automobile selon la revendication 9, **caractérisée en ce que** lesdites orientations, par rapport à un axe latéral du véhicule automobile dans lequel la planche de bord est destinée à être installée, sont différentes.

11. Planche de bord de véhicule automobile selon la revendication 9 ou 10, **caractérisée en ce que** lesdites orientations, par rapport à un axe vertical du véhicule automobile dans lequel la planche de bord est destinée à être installée, sont différentes.

12. Planche de bord de véhicule automobile selon l'une quelconque des revendications précédentes, **caractérisée en ce que**, en réponse à l'activation de certaines touches tactiles (50) de l'écran de commande (5), une nouvelle fenêtre (60) est affichée sur l'écran d'affichage (6).

13. Véhicule automobile comprenant une planche de bord (1) selon l'une quelconque des revendications précédentes et un pare-brise (4) situé au-dessus de la planche de bord (1), l'écran d'affichage (6) étant disposé de manière à masquer une partie du pare-brise (4) au conducteur (3) du véhicule automobile.

14. Véhicule automobile selon la revendication 13, **caractérisé en ce que** l'écran d'affichage (6) est orienté vers le haut du véhicule automobile.

15. Véhicule automobile selon la revendication 13 ou 14, **caractérisé en ce que** l'écran d'affichage (6) est orienté vers le siège conducteur du véhicule automobile.

16. Véhicule automobile selon la revendication 12 à 15, **caractérisé en ce que** les écrans d'affichage (6) et de commande (5) sont rectangulaires, la petite dimension étant verticale par rapport au véhicule automobile.
